# EUROPEAN PATENT APPLICATION

(11) **EP 4 760 943 A1**
(43) Date of publication of application: **17.06.2026**
(21) Application number: 24850619.8
(22) Date of filing: 15.05.2024
(51) Int. Cl.: H01M 50/367, H01M 10/058, H01M 10/052

(54) **POWER BATTERY AND BATTERY PACK**

(30) Priority: 07.08.2023 CN 202310981384
(71) Applicant: SVOLT Energy Technology Co., Ltd., Changzhou, Jiangsu 213200 (CN)
(72) Inventor: ZHANG, Shuang, hangzhou, Jiangsu 213200 (CN); YUAN, Yuan, hangzhou, Jiangsu 213200 (CN); LIU, Changhui, hangzhou, Jiangsu 213200 (CN); XIANG, Xinyu, hangzhou, Jiangsu 213200 (CN)
(74) Representative: Michalski Hüttermann & Partner mbB
(86) International application number: PCT/CN2024/093460
(87) International publication number: WO 2025/030966

(57) **Abstract**

The present application relates to the technical field of batteries. Disclosed are a power battery and a battery pack. The power battery in the present application comprises a housing, a pressure relief mechanism and an electrode group. When the dimensions of a pressure relief channel are determined, an equivalent sectional area S of the pressure relief channel is calculated on the basis of the dimensions of the housing and the formula S=LHTβ/(L+H)/2, S is made to satisfy S 1<S<S2, an equivalent width of the pressure relief channel is then determined on the basis of the formula W=S/T, the lower limit value of the equivalent width of the pressure relief channel is calculated on the basis of W1=S 1/T, and the dimensions of the electrode group are determined on the basis of the dimensions of an inner cavity of the housing and the lower limit value of the equivalent width of the pressure relief channel. The dimensions of a pressure relief channel can be adjusted on the basis of the dimensions of an actual pressure relief mechanism, and the dimensions of the pressure relief channel are determined in a standardized manner, and thus the determination of the dimensions of the pressure relief channel is rationalized, thereby ensuring that a hot gas can effectively flow to a pressure relief mechanism by means of the pressure relief channel in the case of thermal runaway of a battery, which reduces the rupture probability of a housing of the battery in the case of thermal runaway, and effectively improves the safety performance of the battery.

## Description

### CROSS-REFERENCE TO RELATED APPLICATION

The present disclosure claims the priority to the Chinese patent application with the filling No. 202310981384.9 filed with the Chinese Patent Office on August 7, 2023, and entitled "POWER BATTERY AND BATTERY PACK", the contents of which are incorporated herein by reference in entirety.

### TECHNICAL FIELD

The present disclosure relates to the field of battery technologies, and in particular, to a power battery and a battery pack.

### BACKGROUND ART

As a high-energy structure, batteries inevitably face the problem of thermal runaway. The thermal runaway process of a battery is a process of energy and substance release, where the release of substances mainly includes the release of gas. In the prior art, an explosion-proof valve is provided on a battery casing to discharge a hot gas generated during the battery's thermal runaway. The hot gas flows through a pressure relief channel between an electrode assembly and an inner wall of the casing to the explosion-proof valve inside the casing. However, dimensions of an existing pressure relief channel are not associated with an area of the explosion-proof valve, and the dimension design of the pressure relief channel is not standardized, which results in the hot gas being unable to flow to the explosion-proof valve quickly and effectively, thereby causing the battery casing to burst and seriously affecting the safety performance of the battery.

### SUMMARY

In view of this, the present disclosure provides a power battery and a battery pack to solve the problem of battery casing burst due to a non-standard dimension design of a pressure relief channel of an existing battery.

In a first aspect, the present disclosure provides a power battery. The power battery comprises a casing, a pressure relief mechanism, and an electrode assembly. An inner cavity of the casing has a length L, a height H, and a thickness T. The pressure relief mechanism is arranged on the casing, and an area of an opening zone of the pressure relief mechanism is S0. The electrode assembly is arranged inside the casing. The electrode assembly is spaced apart from an inner wall of the casing to form a pressure relief channel. The pressure relief channel has an equivalent sectional area S, and the pressure relief channel has an equivalent width W. A minimum value of the equivalent sectional area of the pressure relief channel is S1, and a maximum value of the equivalent sectional area of the pressure relief channel is S2, where S1=0.1S0 and S2=S0. A gas space occupancy rate of the battery is β, where 0.03≤β≤0.1, S=LHTβ/(L+H)/2, and S1<S<S2; and W=S/T.

Beneficial effects are as follows. For the power battery with this structure, when determining dimensions of the pressure relief channel, the equivalent sectional area S of the pressure relief channel is calculated according to dimensions of the casing and the formula S=LHTβ/(L+H)/2, and S is set to satisfy S1<S<S2. Then, the equivalent width of the pressure relief channel is determined according to the formula W=S/T, and the lower limit value of the equivalent width of the pressure relief channel is calculated according to W1=S1/T. Moreover, dimensions of the electrode assembly are determined according to the length L, height H, thickness T of the inner cavity of the casing and the lower limit value of the equivalent width of the pressure relief channel. The power battery associates the equivalent sectional area of the pressure relief channel with the area of the opening zone of the pressure relief mechanism, allowing the dimensions of the pressure relief channel to be adjusted according to actual dimensions of the pressure relief mechanism, so as to determine the dimensions of the pressure relief channel in a standardized manner, so that the dimensions of the pressure relief channel are determined reasonably, thereby ensuring that a hot gas may effectively flow to the pressure relief mechanism through the pressure relief channel when the battery undergoes thermal runaway, reducing the rupture probability of the battery casing during thermal runaway, and effectively improving the safety performance of the battery.

In an optional implementation, the electrode assembly has a length l and a height h, where β=1-hl/(HL).

Beneficial effects are as follows. When an input parameter of the gas space occupancy rate β is not available, a value of β may be determined according to the formula β=1-hl/(HL).

In an optional implementation, the power battery has a capacity C, the power battery has a rated voltage V, and an area coefficient is α, where 0.3≤α≤1, and S0=CVα.

Beneficial effects are as follows. The are of the opening zone of the pressure relief mechanism may be calculated according to the formula S0=CVα.

In an optional implementation, the pressure relief mechanism is arranged on a side end face of the casing, and an extending direction of the electrode assembly is perpendicular to a plane where the pressure relief mechanism is located.

Beneficial effects are as follows. When the battery undergoes thermal runaway, the hot gas may flow to the pressure relief mechanism along the extending direction of the electrode assembly, so as to reduce a tortuosity of a pressure relief path, thereby rapidly and effectively discharging the hot gas inside the casing during thermal runaway, and lowering the risk of battery explosion.

In an optional implementation, the pressure relief mechanism is an explosion-proof valve.

In an optional implementation, a longitudinal section of the electrode assembly is rectangular, an edge of the electrode assembly is opposite to an edge of the casing, and the edge of the electrode assembly is provided with a chamfer or is inwardly recessed.

Beneficial effects are as follows. The edge of the electrode assembly is provided with the chamfer or is inwardly recessed, so that a sectional area of a pressure relief channel between the edge of the electrode assembly and the edge of the inner wall of the casing is greater than a sectional area of a pressure relief channel at other position. This prevents blockage when the gas flow turns, thereby ensuring that the gas smoothly flows to the explosion-proof valve through the pressure relief channel and then is discharged out of the casing through the explosion-proof valve.

In an optional implementation, the edge of the electrode assembly is provided with an arc chamfer.

Beneficial effects are as follows. The four corners of the electrode assembly are in arc transition, i.e., the four corners of the electrode assembly are streamlined, which facilitates the circulation and discharge of the hot gas out of the casing.

In an optional implementation, the power battery further comprises a support structure supported between the electrode assembly and the casing. The support structure is configured to prevent the electrode assembly from moving and blocking the pressure relief channel.

Beneficial effects are as follows. The support structure is supported between the electrode assembly and the casing, so as to prevent the electrode assembly from moving and blocking the pressure relief channel, thereby ensuring that the hot gas during thermal runaway may smoothly flow to the explosion-proof valve through the pressure relief channel, and reducing the explosion probability of the battery due to thermal runaway.

In an optional implementation, the support structure comprises a support plate and a plurality of support parts that are spaced apart on the support plate. The support plate is provided with a plurality of ventilation holes. A side of the support plate facing away from the support parts is fixed to the electrode assembly, and a side of the support parts away from the support plate abuts against the casing.

Beneficial effects are as follows. The support structure has a stable and simple structure.

In a second aspect, the present disclosure further provides a battery pack. The battery pack comprises the power battery in any one of the above implementations.

Beneficial effects are as follows. The power battery in the battery pack associates the equivalent sectional area of the pressure relief channel with the area of the opening zone of the pressure relief mechanism. The dimensions of the pressure relief channel may be adjusted according to the actual dimensions of the pressure relief mechanism, so that the dimensions of the pressure relief channel are determined reasonably, thereby ensuring that the hot gas may effectively flow to the pressure relief mechanism through the pressure relief channel when the battery undergoes thermal runaway, reducing the rupture probability of the battery casing during thermal runaway, and effectively improving the safety performance of the battery pack.

### BRIEF DESCRIPTION OF DRAWINGS

To illustrate the specific implementations of the present disclosure or the technical solutions in the prior art more clearly, the drawings that need to be used in the description of the specific implementations or the prior art will be briefly introduced below. Obviously, the drawings in the following description are some implementations of the present disclosure, and those of ordinary skill in the art may also obtain other drawings based on these drawings without creative efforts.
FIG. 1 is a sectional view of a power battery according to an embodiment of the present disclosure from a first angle;
FIG. 2 is a sectional view of a power battery according to an embodiment of the present disclosure from a second angle;
FIG. 3 is a schematic diagram of a positional relationship between an electrode assembly and a pressure relief mechanism in a power battery according to an embodiment of the present disclosure;
FIG. 4 is a schematic diagram of an electrode assembly in a power battery according to an embodiment of the present disclosure;
FIG. 5 is a schematic diagram of another electrode assembly in a power battery according to an embodiment of the present disclosure;
FIG. 6 is a schematic diagram of yet another electrode assembly in a power battery according to an embodiment of the present disclosure;
FIG. 7 is a three-dimensional structural schematic diagram of a support structure in a power battery according to an embodiment of the present disclosure;
FIG. 8 is a side view of a support structure in a power battery according to an embodiment of the present disclosure;
FIG. 9 is a schematic diagram of a support structure in a power battery according to an embodiment of the present disclosure;
FIG. 10 is a schematic diagram of a support structure in a power battery according to an embodiment of the present disclosure;
FIG. 11 is a schematic diagram of a support structure in a power battery according to an embodiment of the present disclosure; and
FIG. 12 is a schematic diagram of a prismatic battery.

Explanation of reference numerals:
1, casing; 2, pressure relief mechanism; 3, electrode assembly; 301, tab; 4, pressure relief channel; 5, support structure; 501, support plate; 5011, ventilation hole; 502, support part.

### DETAILED DESCRIPTION OF EMBODIMENTS

To make the purposes, technical solutions, and advantages of the embodiments of the present disclosure clearer, the technical solutions in the embodiments of the present disclosure will be clearly and completely described below with reference to the drawings in the embodiments of the present disclosure. Obviously, the described embodiments are part of the embodiments of the present disclosure, rather than all the embodiments. Based on the embodiments in the present disclosure, all other embodiments obtained by those skilled in the art without creative efforts shall fall within the protection scope of the present disclosure.

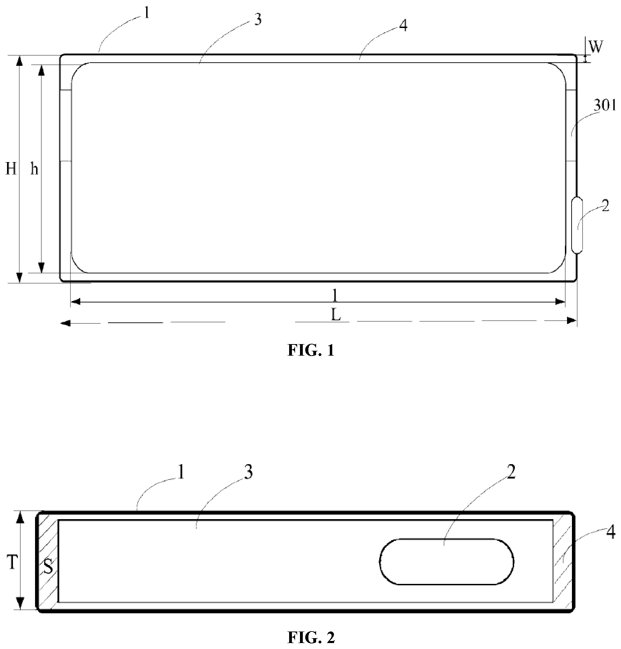

The embodiments of the present disclosure will be described below with reference to FIGS. 1 to 8.

According to the embodiments of the present disclosure, in a first aspect, a power battery is provided. The power battery includes a casing 1, pressure relief mechanism(s) 2, and an electrode assembly 3. An inner cavity of the casing 1 has a length L, a height H, and a thickness T. The pressure relief mechanism 2 is arranged on the casing 1, and an area of an opening zone of the pressure relief mechanism 2 is S0. The electrode assembly 3 is arranged inside the casing 1, and the electrode assembly 3 and an inner wall of the casing 1 are arranged at intervals to form pressure relief channel(s) 4. The pressure relief channel 4 has an equivalent sectional area S and an equivalent width W. A minimum value of the equivalent sectional area of the pressure relief channel 4 is S1, and a maximum value of the equivalent sectional area of the pressure relief channel 4 is S2, where S1=0.1S0, and S2=S0. A gas space occupancy rate of the battery is β, where 0.03≤β≤0.1, S=LHTβ/(L+H)/2, and S1<S<S2; and W=S/T. Correspondingly, W1=S1/T, where W1 is a lower limit value of the equivalent width of the pressure relief channel 4.

For the power battery with this structure, when determining dimensions of the pressure relief channel 4, the equivalent sectional area S of the pressure relief channel 4 is calculated according to dimensions of the casing 1 and the formula S=LHTβ/(L+H)/2, and S is set to satisfy S1<S<S2. Then, the equivalent width of the pressure relief channel 4 is determined according to the formula W=S/T, and the lower limit value of the equivalent width of the pressure relief channel 4 is calculated according to W1=S1/T. Moreover, dimensions of the electrode assembly 3 are determined according to the length L, height H, thickness T of the inner cavity of the casing 1 and the lower limit value of the equivalent width of the pressure relief channel 4. The power battery associates the equivalent sectional area of the pressure relief channel 4 with the area of the opening zone of the pressure relief mechanism 2, allowing the dimensions of the pressure relief channel 4 to be adjusted according to actual dimensions of the pressure relief mechanism 2. This avoids affecting gas discharge due to excessively small dimensions of the pressure relief channel 4, or avoids reducing a space utilization rate of the battery due to excessively large dimensions of the pressure relief channel 4, so as to determine the dimensions of the pressure relief channel 4 in a standardized manner, so that the dimensions of the pressure relief channel 4 are determined reasonably, thereby ensuring that a hot gas may effectively flow to the pressure relief mechanism through the pressure relief channel 4 when the battery undergoes thermal runaway, reducing the rupture probability of the battery casing 1 during thermal runaway, and effectively improving the safety performance of the battery.

The equivalent sectional area S of the pressure relief channel 4 refers to an average value of sectional areas of the pressure relief channel at various positions, and the equivalent width W of the pressure relief channel 4 refers to an average value of widths of the pressure relief channel at various positions.

The gas space occupancy rate β is a proportion of non-solid substances in the casing 1.

In an embodiment, a thickness of the electrode assembly is approximately equal to the thickness of the inner cavity of the casing. The electrode assembly 3 has a length 1 and a height h, where β=1-hl/(HL). When an input parameter of the gas space occupancy rate β is not available, a value of β may be determined according to the formula β=1-hl/(HL).

A capacity of the power battery is C, a rated voltage of the power battery is V, and an area coefficient is α, where 0.3≤α≤1, and S0=CVα. The area of the opening zone of the pressure relief mechanism 2 may be input as a fixed value in advance or calculated using the formula S0=CVα. The area coefficient α is related to a material system: the more active the material system is and the higher the energy density is, the larger the area coefficient α is.

Firstly, the area coefficient α is directly related to the activity of the material system. The greater the gas production is and the faster the gas production rate of the material reaction is, the larger the required area of the pressure relief mechanism is. Reference values for the pressure relief area of the pressure relief mechanism may be obtained through battery thermal runaway gas production tests. The gas production per ampere-hour of different material systems ranges from 0.3L to 1.8L. Assuming the casing has the same pressure resistance and requires all gas to be released within the same period at the same gas discharge rate, the area of the pressure relief mechanism should be positively correlated with, and may be linearly correlated with under ideal conditions, the gas production per ampere-hour of the material system. This is the theoretical premise for determining a value of the area coefficient α.

Secondly, Tables 1 and 2 show the measured gas production per ampere-hour data of different material systems. On this premise, through calculations on existing products, there exists a coefficient α which is approximately equal to a ratio of a product of the battery capacity and voltage to the area of the pressure relief mechanism. In this case, the area coefficient α has a wide value range.

Then, by classifying the material systems and revising the data, the reference value ranges in Tables 1 and 2 are obtained. According to the measured gas production data, the fluctuation of the value range may be narrowed down to approximately 0.1.

Finally, considering an impact of design factors such as a liquid injection coefficient and a compaction density on the gas production, designers may ultimately narrow the fluctuation of the value range to within 0.1.

For example, for a power lithium iron phosphate battery cell, the measured gas production is known to be 1.0 L/Ah, and the value range of the area coefficient α is 0.4 to 0.7. According to the corresponding relationship of the intervals, the range may be narrowed to 0.6 to 0.7. Considering the battery cell design with a relatively high energy density, the value may range from 0.65 to 0.7.

Special Note: for non-pure liquid electrolyte systems, such as solid state and semi-solid state (where a condensed state is a type of semi-solid state) systems, ternary lithium is selected as a positive electrode material. For systems with multiple mixed materials, the gas production is calculated based on the weighted ratio of the mixed materials, or the gas production may be measured, and then a reference for selecting the value of the area coefficient α is made.

**Table 1**

| Material system | Sodium-ion battery system | Solid-state lithium battery system | Condensed-state or semi-solid-state lithium battery system | Energy storage lithium iron phosphate system |
|---|---|---|---|---|
| Gas production L/Ah | 0.4 to 0.6 | 0.3 to 0.8 | 0.4 to 1.2 | 0.5 to 0.8 |
| Reference for selecting the value of α | 0.3 to 0.5 | 0.3 to 0.6 | 0.3 to 0.7 | 0.3 to 0.6 |

**Table 2**

| Material system | Power lithium iron phosphate system | M3P or lithium salts of iron phosphate series | Low/middle-nickel | High-nickel/silicon-doped |
|---|---|---|---|---|
| Gas production L/Ah | 0.6 to 1.2 | 0.6 to 1.4 | 1.2 to 1.6 | 1.5 to 1.8 |
| Reference for selecting the value of α | 0.4 to 0.7 | 0.4 to 0.8 | 0.6 to 0.9 | 0.7 to 1.0 |

As shown in FIGS. 1 to 3, the pressure relief mechanism 2 is arranged on a side end face of the casing 1, and an extending direction of the electrode assembly 3 is perpendicular to a plane where the pressure relief mechanism 2 is located. When the battery undergoes thermal runaway, the hot gas may flow to the pressure relief mechanism 2 along the extending direction of the electrode assembly 3, so as to reduce a tortuosity of a pressure relief path, thereby rapidly and effectively discharging the hot gas inside the casing 1 during thermal runaway, and lowering the risk of battery explosion.

Optionally, in an embodiment, as illustrated in FIGS. 1 and 2, the power battery is a blade battery, the casing 1 is in a shape of an elongated blade, and the pressure relief mechanism 2 is arranged on a side end face of the casing 1.

In other embodiments, two end faces of the casing 1 may each be provided with a pressure relief mechanism 2.

Optionally, in an embodiment, the pressure relief mechanism 2 is an explosion-proof valve. A mounting hole is provided in a side end face of the casing 1, and the explosion-proof valve is mounted in the mounting hole.

As shown in FIG. 1, a longitudinal section of the electrode assembly 3 is rectangular, and edges of the electrode assembly 3 are opposite to edges of the casing 1, respectively. Since a direction of a gas flow changes at the edges of the electrode assembly 3 when the hot gas circulates, and the gas is prone to blockage there, the edge of the electrode assembly 3 is provided with a chamfer or is inwardly recessed, so that a sectional area of a pressure relief channel 4 between the edge of the electrode assembly 3 and the edge of the inner wall of the casing 1 is greater than a sectional area of a pressure relief channel 4 at other positions. This prevents blockage when the gas flow turns, thereby ensuring that the gas smoothly flows to the explosion-proof valve through the pressure relief channel 4 and then is discharged out of the casing 1 through the explosion-proof valve.

Optionally, in an embodiment, as shown in FIG. 1, the edge of the electrode assembly 3 is provided with an arc chamfer, and the four corners of the electrode assembly 3 are in arc transition, i.e., the four corners of the electrode assembly 3 are streamlined, which facilitates the circulation and discharge of the hot gas out of the casing 1.

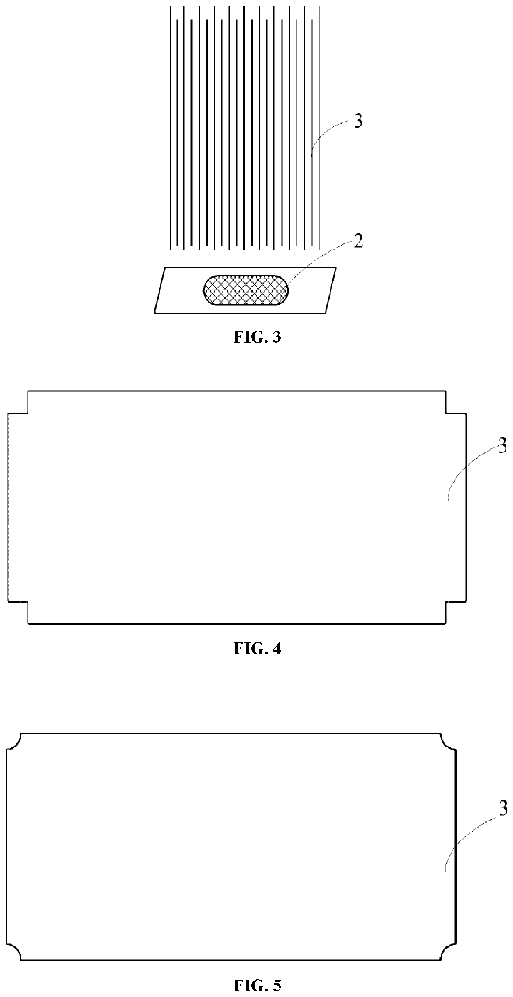

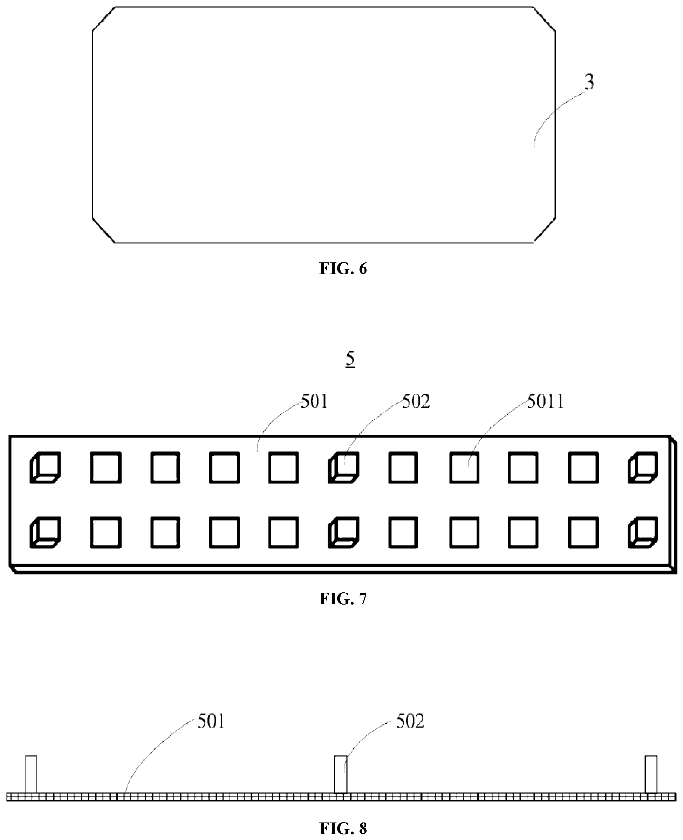

As shown in FIG. 6, in other embodiments, the edge of the electrode assembly 3 may also be provided with a right-angle chamfer. In other embodiments, as shown in FIGS. 4 and 5, the edge of the electrode assembly 3 may also be inwardly recessed. For each edge, an inwardly recessed part may be rectangular, arc-shaped, or any other shapes.

Since the pressure relief channel 4 is reserved between the electrode assembly 3 and the inner wall of the casing 1, the electrode assembly 3 is prone to moving and blocking the pressure relief channel 4 under an action of the gas flow during thermal runaway of the power battery or an external impact, which results in the hot gas generated during thermal runaway being unable to flow to the explosion-proof valve and be discharged. To solve this problem, in an embodiment, as shown in FIGS. 7 and 8, the power battery further includes support structure(s) 5. The support structure 5 is supported between the electrode assembly 3 and the casing 1. The support structure 5 is configured to prevent the electrode assembly 3 from moving and blocking the pressure relief channel 4, thereby ensuring that the hot gas during thermal runaway may smoothly flow to the explosion-proof valve through the pressure relief channel 4, and reducing the explosion probability of the battery due to thermal runaway.

Specifically, referring to FIGS. 7 and 8, the support structure 5 includes a support plate 501 and a plurality of support parts 502. The plurality of support parts 502 are spaced apart on the support plate 501, and the support plate 501 is provided with a plurality of ventilation holes 5011. The support structure 5 is stable and simple in structure. A side of the support plate 501 facing away from the support parts 502 is fixed to the electrode assembly 3, and a side of the support part 502 away from the support plate 501 abuts against the casing 1. The support parts 502 space the support plate 501 apart from the inner wall of the casing 1 to form a gas discharge channel. When the battery undergoes thermal runaway, the hot gas emitted by the electrode assembly 3 is discharged through the ventilation holes 5011 to the pressure relief channel 4 between the support plate 501 and the inner wall of the casing 1, and then flows to the explosion-proof valve through the pressure relief channel 4.

Optionally, in an embodiment, the ventilation holes 5011 are rectangular holes, and the support parts 502 are quadrangular prisms.

In other embodiments, the support structure 5 may also be frame-shaped; alternatively, each support structure 5 may also include two oppositely arranged support plates 501, with the plurality of spaced support parts 502 disposed between the support plates 501.

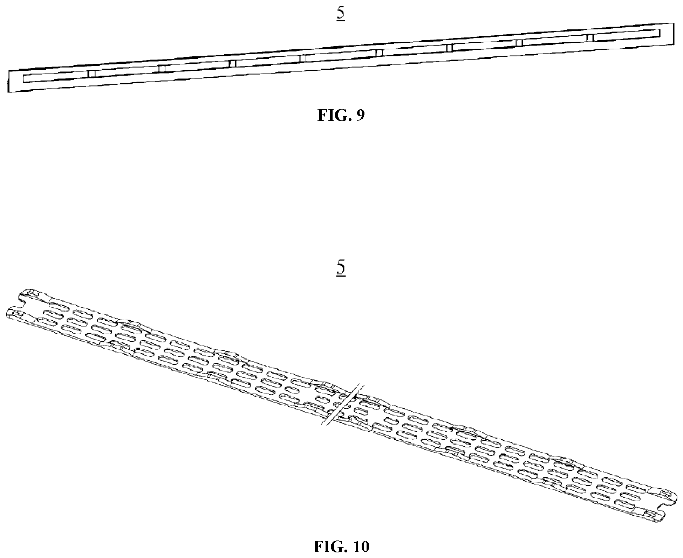

In other embodiments, as shown in FIG. 9, the support structure 5 may also be in a shape of a rectangular plate. A long strip-shaped hole is provided in a middle of the support structure, and a plurality of reinforcing ribs are spaced apart in the strip-shaped hole. A thickness of the reinforcing rib is greater than a thickness of the support structure, so as to form a gas channel along a length direction of the support structure.

As shown in FIG. 10, the support structure 5 may also be in a shape of a rectangular plate. A plurality of uniformly arranged ventilation holes are provided in the support structure 5. Protruding parts are provided on two sides in a width direction of a side of the support structure facing the casing, so as to form a gas channel through the protruding parts.

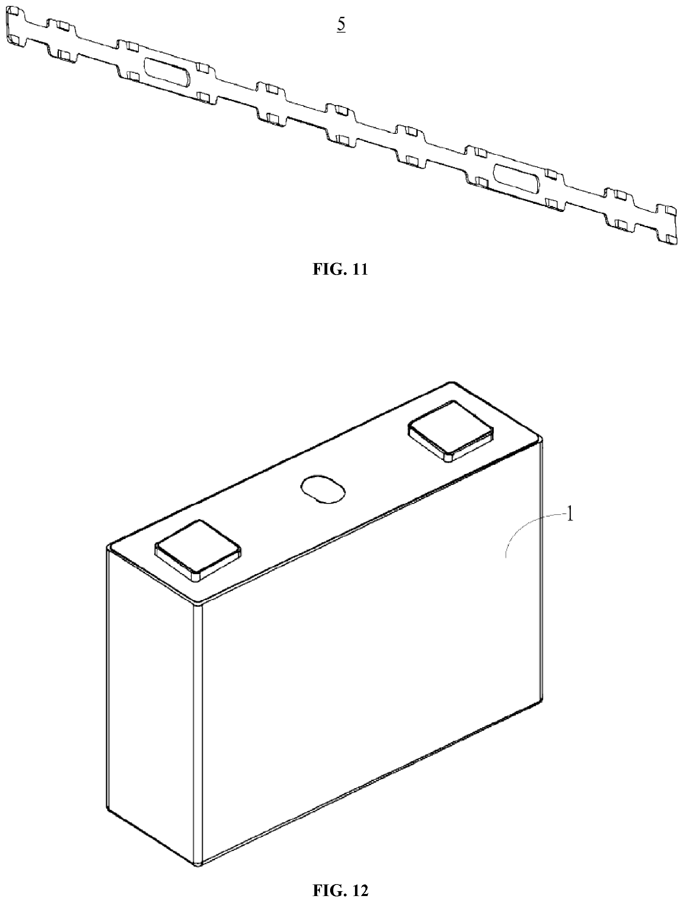

As shown in FIG. 11, the support structure 5 may also be plate-shaped, with varying widths along the length direction, and a segment of the support structure 5 has a large width and a segment of the support structure 5 has a small width. Positions with the small width are used for ventilation, and bump structures are provided on the support plate at positions with the large width to form a gas channel through the bump structures.

As shown in FIG. 12, the power battery may also be a prismatic battery, and the support structure 5 may also be applied to the prismatic battery. The support structure 5 is arranged between an electrode assembly and a casing of the prismatic battery to prevent the electrode assembly from moving and blocking a pressure relief channel of the prismatic battery.

Optionally, in an embodiment, the support plate 501 is in a shape of an elongated plate, and two rows and multiple columns of ventilation holes 5011 are provided in the support plate 501 to ensure the gas discharge effect. For example, two rows and three columns of support parts 502 are provided on the support plate 501. The two rows of support parts 502 are respectively arranged in the same rows as the two rows of ventilation holes 5011, and the three columns of support parts 502 are respectively arranged on the left and right sides and the middle of the support plate 501, so as to enable the support structure 5 to be effectively supported between the electrode assembly 3 and the casing 1, thereby preventing the support plate 501 from collapsing.

As shown in FIG. 1, two ends of the casing 1 are provided with openings. A positive electrode cover plate and a negative electrode cover plate are respectively arranged on the two openings, with a positive electrode post on the positive electrode cover plate and a negative electrode post on the negative electrode cover plate. The openings, positive electrode cover plate, negative electrode cover plate, positive electrode post, and negative electrode post are not shown in the figures. Tabs 301 are respectively provided at two ends of the electrode assembly 3. The tabs 301 at the two ends of the electrode assembly 3 are a positive electrode tab and a negative electrode tab, respectively. The positive electrode tab is connected to a positive electrode connecting piece, and the negative electrode tab is connected to a negative electrode connecting piece. The positive electrode connecting piece is connected to the positive electrode post, and the negative electrode connecting piece is connected to the negative electrode post. Both the positive electrode post and the negative electrode post extend into the casing 1 to the pressure relief channel 4. The positive electrode post and the positive electrode tab are supported between the electrode assembly 3 and the positive electrode cover plate, and the negative electrode post and the negative electrode tab are supported between the electrode assembly 3 and the negative electrode cover plate. There is no need to provide the support structure 5 between the positive electrode cover plate and the electrode assembly 3 or between the negative electrode cover plate and the electrode assembly 3. It is only necessary to rely on the tabs 301 and the electrode posts to support the electrode assembly 3 in a left-right direction, so as to prevent the electrode assembly 3 from moving left and right and blocking the pressure relief channels 4 respectively on left and right sides of the casing 1.

The support structures 5 are arranged respectively on upper and lower sides of the electrode assembly 3 to prevent the electrode assembly 3 from moving up and down and blocking the pressure relief channels 4 respectively above and below the electrode assembly 3. When assembling the power battery, a side of the support plate 501 facing away from the support parts 502 can first be bonded to upper and lower parts of the electrode assembly 3, and then the integral structure of the electrode assembly 3 and the support structures 5 is placed inside the casing 1.

The steps for determining the dimensions of the pressure relief channel 4 of the power battery are as follows.

1. The area of the opening zone of the explosion-proof valve is calculated according to the formula S0=CVα, where the capacity of the battery is C=195 Ah, the rated voltage is V=3.2 V, the area coefficient α for the lithium iron phosphate system is 0.7, and these values are substituted into the formula S0=CVα to calculate that S0=436.8 mm². According to the area of the opening zone of the explosion-proof valve, the lower limit value of the equivalent sectional area of the pressure relief channel 4 at any position is determined to be S1=0.1S0=43.7 mm², and the upper limit value of the equivalent sectional area of the pressure relief channel 4 is determined to be S2=436.8 mm².

2. According to the equivalent sectional area S=LHTβ/(L+H)/2 of the pressure relief channel 4, it is known that the length of the inner cavity of the battery casing 1 is L=575 mm, the height of the inner cavity of the battery is H=117 mm, the thickness of the inner cavity of the battery is T=21 mm, and the input gas space occupancy rate is β=5%, the equivalent sectional area of the pressure relief channel 4 is calculated as S=51 mm², which satisfies S1<S<S2. Then, the equivalent width of the pressure relief channel 4 is calculated as W=2.4 mm through the formula W=S/T, and the lower limit value of the equivalent width of the pressure relief channel 4 is calculated as W1=2.1 mm through the formula W1=S1/T, and then the dimensions of the electrode assembly 3 are determined taking the lower limit value as a boundary.

3. If the input parameter of the gas space occupancy rate β is not available, designers may input the dimensions of the electrode assembly 3 according to actual conditions and return to Step 2 to determine if the requirement is met.

For example, the dimensions of the electrode assembly 3 are input as: length l=570 mm and height h=114 mm. The gas space occupancy rate is calculated as β=1-hl/(HL)=3.4%, and the equivalent sectional area of the pressure relief channel 4 is calculated as S=35 mm². It is determined that S<S1, the dimension design of the electrode assembly is unreasonable. Therefore, it is necessary to reduce the dimension of the electrode assembly 3 to increase the gas space occupancy rate β. The length and height of the electrode assembly 3 may be respectively set to l=570 mm and h=112.5 mm. It is calculated that β=4.7% and S=48 mm², and it is determined that S1<S<S2 is satisfied. Thus, the dimension design of the explosion-proof valve and the pressure relief channel 4 is reasonable.

### Example 1

Referring to the above design steps, it is known that the capacity of the battery is C=195 Ah, the rated voltage is V=3.2 V, the area coefficient α for the lithium iron phosphate system is 0.7, the length of the inner cavity of the battery casing 1 is L=575 mm, the height of the inner cavity of the battery is H=117 mm, and the thickness of the inner cavity of the battery is T=21 mm, and the input β is 5.0%, the dimensions of the electrode assembly are calculated as: h=114.6 mm, l=557.8 mm, S=51 mm², S1=43.7 mm², and S2=436.8 mm². Since S1<S<S2, it can be determined that the dimension design of the pressure relief channel is evaluated as reasonable. Subsequently, a battery thermal runaway test was conducted to verify the cracking of the casing. The calculation results and the cracking of the casing are shown in Tables 3 and 4.

### Comparative Example 1

Referring to the design steps of Example 1, the dimensions of the electrode assembly are input as: h=115 mm, and 1=561 mm. It is calculated that β=4.1%, S=41.9 mm², S1=43.7 mm², and S2=436.8 mm². Since S<S1, it can be determined that the dimension design of the pressure relief channel is evaluated as unreasonable. Subsequently, a battery thermal runaway test was conducted to verify the cracking of the casing. The calculation results and the cracking of the casing are shown in Tables 3 and 4.

### Comparative Example 2

Referring to the design steps of Example 1, the dimensions of the electrode assembly are input as: h=114 mm and l=570 mm. It is calculated that β=3.4%, S=34.8 mm², S1=43.7 mm², and S2=436.8 mm². Since S<S1, it can be determined that the dimension design of the pressure relief channel is evaluated as unreasonable. Subsequently, a battery thermal runaway test was conducted to verify the cracking of the casing. The calculation results and the cracking of the casing are shown in Tables 3 and 4.

### Comparative Example 3

Referring to the design steps of Example 1, the dimensions of the electrode assembly are input as: h=114 mm and l=564 mm. It is calculated that β=4.4%, S=45.2 mm², S1=43.7 mm², and S2=436.8 mm². Since S1<S<S2, it can be determined that the dimension design of the pressure relief channel is evaluated as reasonable. Subsequently, a battery thermal runaway test was conducted to verify the cracking of the casing. The calculation results and the cracking of the casing are shown in Tables 3 and 4.

**Table 3**

| Examples | C/Ah | V/V | α | β | H/mm | L/mm | T/mm | h/mm |
|---|---|---|---|---|---|---|---|---|
| Example 1 | 195 | 3.2 | 0.7 | 5.0% | 117 | 575 | 21 | 114.6 |
| Comparative Example 1 | 195 | 3.2 | 0.7 | 4.1% | 117 | 575 | 21 | 115 |
| Comparative Example 2 | 195 | 3.2 | 0.7 | 3.4% | 117 | 575 | 21 | 114 |
| Comparative Example 3 | 195 | 3.2 | 0.7 | 4.4% | 117 | 575 | 21 | 114 |

**Table 4**

| Examples | 1/mm | S0/mm² | S1/mm² | S/mm² | W1/mm | Design evaluation | Cracking frequency of the casing |
|---|---|---|---|---|---|---|---|
| Example 1 | 557.8 | 436.8 | 43.7 | 51.0 | 2.4 | Reasonable | 0/3 |
| Comparative Example 1 | 561 | 436.8 | 43.7 | 41.9 | 2.0 | Unreasonable | 1/3 |
| Comparative Example 2 | 570 | 436.8 | 43.7 | 34.8 | 1.7 | Unreasonable | 2/3 |
| Comparative Example 3 | 564 | 436.8 | 43.7 | 45.2 | 2.2 | Reasonable | 0/3 |

### Example 2

Referring to the above design steps, it is known that the capacity of the battery is C=106 Ah, the rated voltage is V=3.19 V, the area coefficient α for the lithium iron phosphate system is 0.65, the length of the inner cavity of the battery casing 1 is L=578 mm, the height of the inner cavity of the battery is H=91 mm, and the thickness of the inner cavity of the battery is T=15 mm, and the input β is 4%, the dimensions of the electrode assembly are calculated as: h=89.4 mm, l=558.8 mm, S=23.6 mm², S1=22 mm², and S2=219.8 mm². Since S1<S<S2, it can be determined that the dimension design of the pressure relief channel is evaluated as reasonable. Subsequently, a battery thermal runaway test was conducted to verify the cracking of the casing. The calculation results and the cracking of the casing are shown in Tables 5 and 6.

### Comparative Example 4

Referring to the design steps of Example 2, the dimensions of the electrode assembly are input as: h=89 mm, and l=570 mm. It is calculated that β=3.6%, S=20.9 mm², S1=22 mm², and S2=219.8 mm². Since S<S1, it can be determined that the dimension design of the pressure relief channel is evaluated as unreasonable. Subsequently, a battery thermal runaway test was conducted to verify the cracking of the casing. The calculation results and the cracking of the casing are shown in Tables 5 and 6.

### Comparative Example 5

Referring to the design steps of Example 2, the dimensions of the electrode assembly are input as: h=89 mm and l=566 mm. It is calculated that β=4.2%, S=24.9 mm², S1=22 mm², and S2=219.8 mm². Since S1<S<S2, it can be determined that the dimension design of the pressure relief channel is evaluated as reasonable. Subsequently, a battery thermal runaway test was conducted to verify the cracking of the casing. The calculation results and the cracking of the casing are shown in Tables 5 and 6.

**Table 5**

| Examples | C/Ah | V/V | α | β | H/mm | L/mm | T/mm | h/mm |
|---|---|---|---|---|---|---|---|---|
| Example 2 | 106 | 3.19 | 0.65 | 4.0% | 91 | 578 | 15 | 89.4 |
| Comparative Example 4 | 106 | 3.19 | 0.65 | 3.6% | 91 | 578 | 15 | 89 |
| Comparative Example 5 | 106 | 3.19 | 0.65 | 4.2% | 91 | 578 | 15 | 89 |

**Table 6**

| Examples | l/mm | S0/mm² | S1/mm² | S/mm² | W1/mm | Design evaluation | Cracking frequency of the casing |
|---|---|---|---|---|---|---|---|
| Example 2 | 558.8 | 219.8 | 22.0 | 23.6 | 1.6 | Reasonable | 0/3 |
| Comparative Example 4 | 570 | 219.8 | 22.0 | 20.9 | 1.4 | Unreasonable | 2/3 |
| Comparative Example 5 | 566 | 219.8 | 22.0 | 24.9 | 1.7 | Reasonable | 0/3 |

### Example 3

Referring to the above design steps, it is known that the capacity of the battery is C=150 Ah, the rated voltage is V=3.2 V, the area coefficient α for the lithium iron phosphate system is 0.7, the length of the inner cavity of the battery casing 1 is L=574 mm, the height of the inner cavity of the battery is H=120 mm, and the thickness of the inner cavity of the battery is T=16 mm, and the input β is 4.4%, the dimensions of the electrode assembly are calculated as: h=117.8 mm, l=555.4 mm, S=34.9 mm², S1=33.6 mm², and S2=336 mm². Since S1<S<S2, it can be determined that the dimension design of the pressure relief channel is evaluated as reasonable. Subsequently, a battery thermal runaway test was conducted to verify the cracking of the casing. The calculation results and the cracking of the casing are shown in Tables 7 and 8.

### Comparative Example 6

Referring to the design steps of Example 3, the dimensions of the electrode assembly are input as: h=118 mm, and l=559 mm. It is calculated that β=4.2%, S=33.6 mm², S1=33.6 mm², and S2=336 mm². Since S=S1, it can be determined that the dimension design of the pressure relief channel is evaluated as unreasonable. Subsequently, a battery thermal runaway test was conducted to verify the cracking of the casing. The calculation results and the cracking of the casing are shown in Tables 7 and 8.

### Comparative Example 7

Referring to the design steps of Example 3, the dimensions of the electrode assembly are input as: h=118 mm and l=562 mm. It is calculated that β=3.7%, S=29.6 mm², S1=33.6 mm², and S2=336 mm². Since S<S1, it can be determined that the dimension design of the pressure relief channel is evaluated as unreasonable. Subsequently, a battery thermal runaway test was conducted to verify the cracking of the casing. The calculation results and the cracking of the casing are shown in Tables 7 and 8.

**Table 7**

| Examples | C/Ah | V/V | α | β | H/mm | L/mm | T/mm | h/mm |
|---|---|---|---|---|---|---|---|---|
| Example 3 | 150 | 3.2 | 0.7 | 4.4% | 120 | 574 | 16 | 117.8 |
| Comparative Example 6 | 150 | 3.2 | 0.7 | 4.2% | 120 | 574 | 16 | 118 |
| Comparative Example 7 | 150 | 3.2 | 0.7 | 3.7% | 120 | 574 | 16 | 118 |

**Table 8**

| Examples | l/mm | S0/mm² | S1/mm² | S/mm² | W1/mm | Design evaluation | Cracking frequency of the casing |
|---|---|---|---|---|---|---|---|
| Example 3 | 555.4 | 336 | 33.6 | 34.9 | 2.2 | Reasonable | 0/3 |
| Comparative Example 6 | 559 | 336 | 33.6 | 33.6 | 2.1 | Unreasonable | 1/3 |
| Comparative Example 7 | 562 | 336 | 33.6 | 29.6 | 1.8 | Reasonable | 3/3 |

As can be seen from Tables 3 to 8, a total of 15 casings were tested with unreasonable dimension design evaluation of pressure relief channels, among which 9 casings cracked. It is evident that for relatively unreasonable channel designs, the cracking frequency of the casing after battery thermal runaway is 9/15, exceeding 50%. A reasonable pressure relief channel design is able to significantly reduce the risk of casing rupture.

The capacity C of the battery, the rated voltage V, the area coefficient α, the length L of the inner cavity of the battery casing 1, the height H of the inner cavity of the battery, and the thickness T of the inner cavity of the battery are known, and β was selected and input to calculate the dimensions h, 1, S, S1 and S2 of the electrode assembly; or the dimensions h and l of the electrode assembly were input to calculate β, S, S1 and S2. Magnitudes of S, S1 and S2 were compared, so as to determine whether the dimension design of the pressure relief channel is evaluated as reasonable. Subsequently, a battery thermal runaway test was conducted to verify the cracking of the casing. The calculation results and the cracking of the casing are shown in Tables 9 and 10.

**Table 9**

| Examples | | C/Ah | V/V | α | β | H/mm | L/mm | T/mm | h/mm |
|---|---|---|---|---|---|---|---|---|---|
| Example 4 | Input β | 115 | 3.7 | 0.8 | 3.0% | 98 | 147 | 51 | 96.2 |
| Example 5 | Input h, l | 115 | 3.7 | 0.8 | 10% | 99 | 147 | 51 | 92 |
| Example 6 | Input h, l | 115 | 3.7 | 0.8 | 9% | 97 | 147 | 51 | 91 |
| Example 7 | Input β | 136 | 3.65 | 1 | 3.0% | 98 | 147 | 51 | 96.2 |
| Example 8 | Input β | 136 | 3.65 | 1 | 4.0% | 98 | 147 | 51 | 95.6 |
| Example 9 | Input h, l | 136 | 3.65 | 1 | 10% | 99 | 147 | 51 | 92 |
| Example 10 | Input β | 70 | 3.5 | 0.3 | 4.4% | 98 | 147 | 51 | 95.4 |
| Example 11 | Input β | 70 | 3.5 | 0.3 | 6.0% | 98 | 147 | 51 | 94.5 |
| Example 12 | Input h, l | 70 | 3.5 | 0.3 | 4% | 98 | 147 | 51 | 95 |
| Example 13 | Input h, l | 155 | 3.72 | 0.9 | 7% | 105 | 219 | 43 | 100 |
| Example 14 | Input h, l | 155 | 3.72 | 0.9 | 4% | 102 | 219 | 43 | 100 |
| Example 15 | Input h, l | 155 | 3.72 | 0.9 | 3% | 101 | 219 | 43 | 100 |
| Example 16 | Input h, l | 155 | 3.72 | 0.9 | 3% | 102 | 219 | 43 | 100 |

**Table 10**

| Examples | | l/mm | S0/mm² | S1/mm² | S/mm² | W1/mm | Design evaluation | Cracking frequency |
|---|---|---|---|---|---|---|---|---|
| | | | | | | | | of the casing |
| Example 4 | Input β | 145.2 | 340.4 | 34.0 | 45.0 | 0.9 | Reasonable | 0/3 |
| Example 5 | Input h, l | 143 | 340.4 | 34.0 | 144.8 | 2.8 | Reasonable | 0/3 |
| Example 6 | Input h, l | 143 | 340.4 | 34.0 | 130.2 | 2.6 | Reasonable | 0/3 |
| Example 7 | Input β | 145.2 | 496.4 | 49.6 | 45.0 | 0.9 | Unreasonable | 2/3 |
| Example 8 | Input β | 146.1 | 496.4 | 49.6 | 60.0 | 1.2 | Reasonable | 0/3 |
| Example 9 | Input h, l | 143 | 496.4 | 49.6 | 144.8 | 2.8 | Reasonable | 0/3 |
| Example 10 | Input β | 146.5 | 73.5 | 7.4 | 66.0 | 1.3 | Reasonable | 0/3 |
| Example 11 | Input β | 147.9 | 73.5 | 7.4 | 90.0 | 1.8 | Unreasonable | 0/3 |
| Example 12 | Input h, l | 146 | 73.5 | 7.4 | 55.8 | 1.1 | Reasonable | 0/3 |
| Example 13 | Input h, l | 214 | 518.9 | 51.9 | 105.8 | 2.5 | Reasonable | 0/3 |
| Example 14 | Input h, l | 214 | 518.9 | 51.9 | 62.8 | 1.5 | Reasonable | 0/3 |
| Example 15 | Input h, l | 214 | 518.9 | 51.9 | 48.3 | 1.1 | Unreasonable | 2/3 |
| Example 16 | Input h, l | 216 | 518.9 | 51.9 | 49.4 | 1.1 | Unreasonable | 2/3 |

As can be seen from Table 10, the cracking frequency of casings with unreasonable pressure relief channel designs is much higher than the cracking frequency of casings with reasonable pressure relief channel designs. A reasonable pressure relief channel design is able to significantly reduce the risk of casing rupture.

According to the embodiments of the present disclosure, in another aspect, a battery pack is further provided. The battery pack includes the above power battery.

The power battery in the battery pack associates the equivalent sectional area of the pressure relief channel 4 with the area of the opening zone of the pressure relief mechanism 2. The dimensions of the pressure relief channel 4 can be adjusted according to the actual dimensions of the pressure relief mechanism 2, so that the dimensions of the pressure relief channel 4 are determined reasonably, thereby ensuring that the hot gas may effectively flow to the pressure relief mechanism through the pressure relief channel 4 when the battery undergoes thermal runaway, reducing the rupture probability of the battery casing 1 during thermal runaway, and effectively improving the safety performance of the battery pack.

Although the embodiments of the present disclosure are described with reference to the drawings, those skilled in the art can make various modifications and variations without departing from the spirit and scope of the present disclosure, and such modifications and variations all fall within the scope defined by the appended claims.

## Claims

1. A power battery, **characterized by** comprising:
a casing, wherein an inner cavity of the casing has a length L, a height H, and a thickness T;
a pressure relief mechanism arranged on the casing, wherein an area of an opening zone of the pressure relief mechanism is S0;
an electrode assembly arranged inside the casing, wherein the electrode assembly is spaced apart from an inner wall of the casing to form a pressure relief channel,
wherein the pressure relief channel has an equivalent sectional area S, and the pressure relief channel has an equivalent width W; a minimum value of the equivalent sectional area of the pressure relief channel is S1, and a maximum value of the equivalent sectional area of the pressure relief channel is S2, where S1=0.1S0 and S2=S0; a gas space occupancy rate of the battery is β, where 0.03≤β≤0.1, S=LHTβ/(L+H)/2, and S1<S<S2; and W=S/T; and
the power battery further comprising a support structure supported between the electrode assembly and the casing, wherein the support structure is configured to prevent the electrode assembly from moving and blocking the pressure relief channel.

2. The power battery as claimed in claim 1, wherein the electrode assembly has a length l and a height h, where β=1-hl/(HL).

3. The power battery as claimed in claim 1 or 2, wherein the power battery has a capacity C, the power battery has a rated voltage V, and an area coefficient is α, where 0.3≤α≤1, and S0=CVα.

4. The power battery as claimed in claim 1 or 2, wherein the pressure relief mechanism is arranged on a side end face of the casing, and an extending direction of the electrode assembly is perpendicular to a plane where the pressure relief mechanism is located.

5. The power battery as claimed in claim 1 or 2, wherein the pressure relief mechanism is an explosion-proof valve.

6. The power battery as claimed in claim 1 or 2, wherein a longitudinal section of the electrode assembly is rectangular, an edge of the electrode assembly is opposite to an edge of the casing, and the edge of the electrode assembly is provided with a chamfer or is inwardly recessed.

7. The power battery as claimed in claim 6, wherein the edge of the electrode assembly is provided with an arc chamfer.

8. The power battery as claimed in claim 1 or 2, wherein the support structure comprises a support plate and a plurality of support parts that are spaced apart on the support plate, the support plate is provided with a plurality of ventilation holes, a side of the support plate facing away from the support parts is fixed to the electrode assembly, and a side of the support parts away from the support plate abuts against the casing.

9. A battery pack, **characterized by** comprising the power battery as claimed in any one of claims 1 to 8.
